Europäisches Patentamt

European Patent Office

Office européen des brevets

(11) Publication number: **0 404 313**
**A2**

# (12) EUROPEAN PATENT APPLICATION

(21) Application number: **90304558.1**

(51) Int. Cl.⁵: **G21C 13/00**

(22) Date of filing: **26.04.90**

(30) Priority: **19.06.89 US 368432**

(43) Date of publication of application:
**27.12.90 Bulletin 90/52**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Nath, Raymond John**
**4023 Sloanwood Drive**
**Murrysville, PA 15668(US)**
Inventor: **Mavretish, Robert Steven**
**108 Virginia Drive**
**New Stanton, PA 15672(US)**
Inventor: **Bengel, Thomas Gerald**
**627 Millers Lane**
**Pittsburgh, PA 15239(US)**
Inventor: **Miller, Phillip Edward**
**1402 Clearview Drive**
**Greensburg, PA 15601(US)**
Inventor: **Grimm, Noel Phillip**

**1350 Hillsdale Drive**
**Monroeville, Pa 15146(US)**
Inventor: **Tatch, Michael David**
**22 Old Chimney Road**
**Randolph, NJ 07869(US)**
Inventor: **Katz, Leonard R.**
**1100 Penn Center Boulevard**
**Pittsburgh, PA 15235(US)**
Inventor: **Blaushild, Ronald Maxim**
**4902 Simmons Drive**
**Export, PA 15642(US)**
Inventor: **Abbott, Stephen Leslie**
**4428 Marywood Drive**
**Monroeville, PA 15146(US)**
Inventor: **Salton, Robert B.**
**320 Tahoe Drive**
**Pittsburgh, PA 15239(US)**
Inventor: **Shaffer, Robert**
**1211 Macon Avenue**
**Pittsburgh, PA 15218(US)**

(74) Representative: **van Berlyn, Ronald Gilbert**
**23, Centre Heights**
**London, NW3 6JG(GB)**

(54) **Electric resistance heater unit assembly.**

(57) A heater unit assembly for annealing a reactor vessel, the vessel having an interior wall and being open at the top, and the assembly being constructed to be inserted into the vessel. The assembly is composed of: a support structure including a top plate (6) dimensioned to rest on the top of the vessel and a hollow cylindrical body (2,4) which is open at the top and closed at the bottom, the body (2,4) being secured to the top plate (6) to extend downwardly therefrom and having a configuration at least approximately conforming to that of the vessel and having an outer surface which faces the interior wall of the vessel when the assembly is inserted in the vessel;
a plurality of electrical resistance heater units (14,16,18) mounted on the body (2,4) and projecting from the outer surface of the body (2,4) to face the interior wall of the vessel when the assembly is inserted in the vessel, the heater units (14,16,18) being distributed uniformly across the outer surface for effecting uniform heating of the vessel; andelectrical power conductors (86,90) extending through the top plate (6) to the interior of the body (2,4) and conductively connected to the heater units (14,16,18).

FIG. 1

## ELECTRIC RESISTANCE HEATER UNIT ASSEMBLY

This invention was made under United States Government contract, and the Federal Government may have rights in the subject invention.

### CROSS-REFERENCE TO RELATED APPLICATIONS

The following applications disclose subject matter which is related to the present invention. They are identified by title and U.S. serial number. They were all filed in the United States on June 19, 1989:

| Title | Serial No. |
|-------|-----------|
| MODULAR ANNEALING APPARATUS FOR IN SITU REACTOR VESSEL ANNEALING AND RELATED METHOD OF ASSEMBLY | 368,454 |
| WATER FILLED TANKS FOR TEMPORARY SHIELDING OF REACTOR VESSEL INTERNALS AND METHOD OF ASSEMBLY | 368,133 |
| COFFER DAM FOR TEMPORARY SHIELDING OF REACTOR VESSEL INTERNALS AND METHOD OF ASSEMBLY | 368,635 |
| REACTOR VESSEL ANNEALING SYSTEM | 368,456 |
| ANNEALING UNIT INSERTION AND REMOVAL SYSTEM | 368,503 |
| HEATING EQUIPMENT INSTALLATION SYSTEM AND METHOD | 368,495 |
| TEMPERATURE MONITORING DEVICE AND THERMOCOUPLE ASSEMBLY THEREFOR | 368,459 |
| REACTOR VESSEL NOZZLE THERMAL BARRIER | 368,738 |

The present invention relates to a heater unit assembly for effecting annealing treatments, particularly for annealing embrittled reactor vessels.

During the normal operation of a nuclear reactor, the reactor vessel, which is normally made of steel and which houses a core containing nuclear fuel, is exposed to intense radiation. Experience has shown that this radiation causes changes in the fine grain structure of the steel walls of the vessel. These structural changes make the walls brittle, a problem commonly referred to as reactor vessel embrittlement. Embrittlement reduces the flexibility of the vessel wall and increases the susceptibility of the vessel wall to fracturing, particularly if subjected to sudden stresses, such as due to operating transient events and pressurized thermal shock events.

Because of this embrittlement phenomenon, the United States Nuclear Regulatory Commission requires that a reactor vessel be removed from service when embrittlement reaches a predetermined stage, thus ending the useful life of this portion of the nuclear power plant. Replacement of such a vessel is extremely expensive because the vessel is built into and is a part of the reactor containment building, thereby making replacement economically impractical.

In order to deal with this problem, it has been proposed to subject such a vessel to annealing in place in order to restore the ductility and toughness of the metal constituting the reactor vessel. The devices which have already been proposed for performing this operation present a number of drawbacks, particularly in that they do not achieve a sufficiently uniform heating of the vessel. Moreover, because of the extremely high temperatures involved, which can be in excess of 600° C, there is a probability of heating element failure which would, at the least, produce an incomplete annealing result, or could require that the annealing process be aborted.

It is an object of the present invention to improve the uniformity with which a vessel is annealed, and a more specific object of the invention is to provide an annealing device composed of heater units which are so disposed as to assure a high degree of temperature uniformity across the vessel surface.

The above and other objects are achieved, according to the present invention, by a heater unit assembly for annealing a reactor pressure vessel, the pressure vessel having an interior wall and being open at the top, and the assembly being constructed to be inserted into the vessel, the assembly comprising: support means composed of a top plate dimensioned to rest on the top of the vessel and a hollow cylindrical body which is open at the top and closed at the bottom, the body being secured to the top plate to extend downwardly therefrom and having a configuration at least approximately conforming to that of the vessel and having an outer surface which faces the interior wall of the vessel when the assembly is inserted in the vessel; a plurality of electrical resistance heater units mounted on the body and projecting from the outer surface of the body to face the interior wall of the vessel when the assembly is inserted in the vessel, the heater units being distributed uniformly across the outer surface for effecting uniform heating of the vessel; and electrical power conductor means extending through the top plate to the interior of the body and conductively connected to the heater units.

Figure 1 is a side elevational view of a preferred embodiment of an annealing heater unit assembly according to the invention.

Figure 2 is a front view of one embodiment of a heater unit of the assembly of Figure 1.

Figure 3 is a plan view of the unit of Figure 2.

Figure 4 is a cross-sectional of the unit of Figure 2, taken along the line IV-IV of Figure 2.

Figure 5 is a plan schematic view of another heater unit of the assembly of Figure 1.

Figure 6 is a detail view of a power connector employed in the embodiment of Figure 1.

Figure 7 is a detail view, partly in cross section, of an embodiment of another connector employed in the assembly of Figure 1.

Figure 8 is a detail view, in cross section, of a power conductor employed in the embodiment of Figure 1.

Figure 9 is a cross-sectional view taken along the line IX-IX of Figure 8.

Figure 10 is a cross-sectional detail view of another embodiment of the connecting portion of a heater unit according to the present invention.

Figure 11 is a cross-sectional detail view of one component of the structure shown in Figure 10.

Figure 12 is an exploded, perspective view of an assembly and maintenance stand according to the invention for supporting the heater unit of Figure 1.

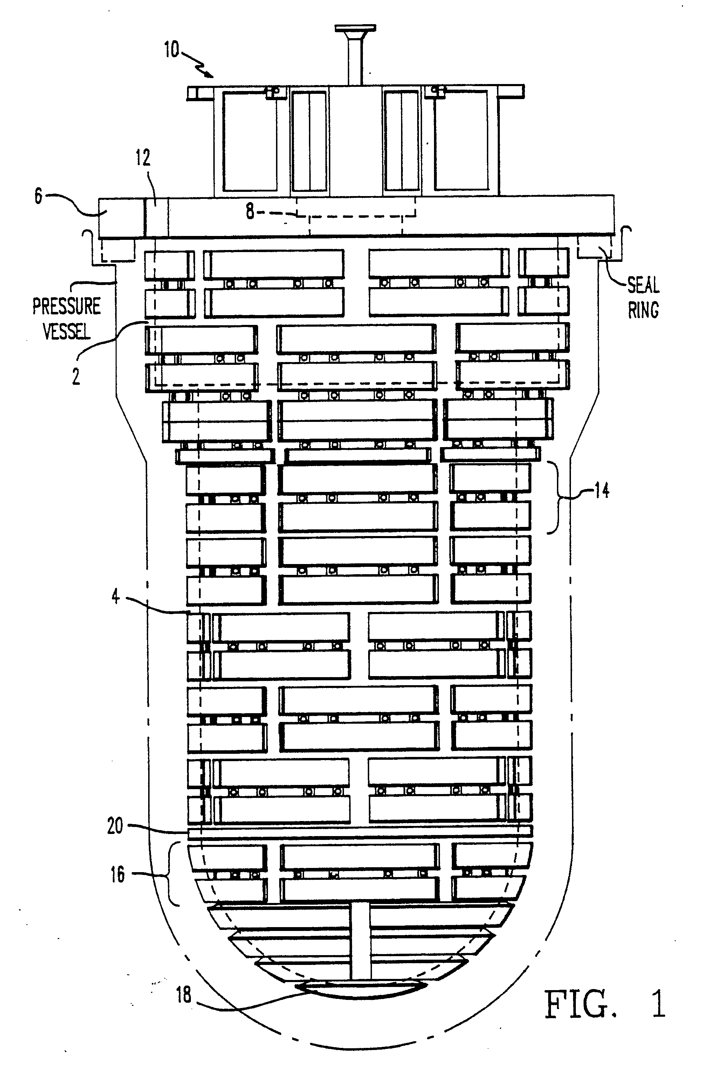

Figure 1 is an elevational view showing the general arrangement of an annealing heater unit assembly according to the invention. The assembly includes a heater unit support structure in the form of a hollow shell having an upper cylindrical portion 2 and a lower cylindrical portion 4 having a smaller diameter than portion 2. The lower end of lower cylindrical portion 4 is closed by a hemispherical dome. The upper end of cylindrical portion 2 is secured to a thick top plate 6 provided with a large central opening 8 for entry of personnel into the interior of the shell. Central opening 8 is provided with a plurality of smaller openings for passage of electrical current conductors and thermocouple assemblies. Top plate 6 is surmounted by a support structure 10 for supporting the current conductors and thermocouple conduits.

Top plate 6 is provided, at its periphery, with two alignment openings 12, one of which is visible in Figure 1. Openings 12 are disposed to engage with alignment guides mounted at the top of the vessel to be treated in order to assure that the heater unit assembly is correctly oriented in the vessel. A suitable alignment arrangement is disclosed in the above-referenced application having U.S. Serial No. 368,495 filed on the same date as the present application (June 19, 1989). The two alignment openings 12 are spaced apart around the periphery of top plate 6 by an angle of other than 180° to present only one correct alignment position.

Figure 1 additionally shows, in broken lines, the inner surface of a pressure vessel which the illustrated assembly is constructed to treat. This pressure vessel is formed in a conventional manner to have, at its top, a ledge which will support the heater unit assembly, preferably via a metal seal ring constructed to establish a sealed joint between the ledge and top plate 6.

The outer surfaces of cylindrical portions 2 and 4 carry an array of heater units 14, each of which is shaped to conform to its associated cylindrical portion. The hemispherical dome at the lower end of cylindrical portion 4 is provided with similar heater units 16 which differ from units 14 only in that they are shaped to conform to the hemispherical dome. The bottom of the dome carries a further heater unit 18.

In addition, lower cylindrical portion 4 carries a support ring 20 which is employed to facilitate horizontal shipment of the assembly and insertion of the assembly into a vessel to be treated.

In the illustrated embodiment, upper cylindrical portion 2 has a larger diameter than lower cylindrical portion 4 in order to conform to the configuration of a particular reactor pressure vessel. For use with pressure vessels having other configurations, the corresponding configuration of the shell would be altered. For example, for a reactor pressure vessel having a constant diameter along its entire height, the heater assembly shell would similarly have a constant diameter along its height.

Top plate 6 serves as a support for the heater unit assembly within a vessel and as a support surface for personnel to position the thermocouples and effect the necessary electrical connections. The assembly further includes a drain tube which extends vertically along the axis of the assembly and projects downwardly through an opening in the center of the dome in order to permit removal of water from the bottom of the pressure vessel prior to heat treatment. During installation of the heater unit assembly in a pressure vessel, the vessel will be filled with water in order to provide radiation shielding. Therefore, all components of the assembly are constructed to be water-submersible. Before an annealing treatment is performed, all water will be drained out of the pressure vessel.

Heater units 14 and 16 are arranged in a plurality of horizontal rows and, preferably, the heater units of one row are angularly offset from those of the adjacent rows over at least a substantial portion of the height of the assembly. It has been found that this arrangement provides a more uniform heating of the pressure vessel wall.

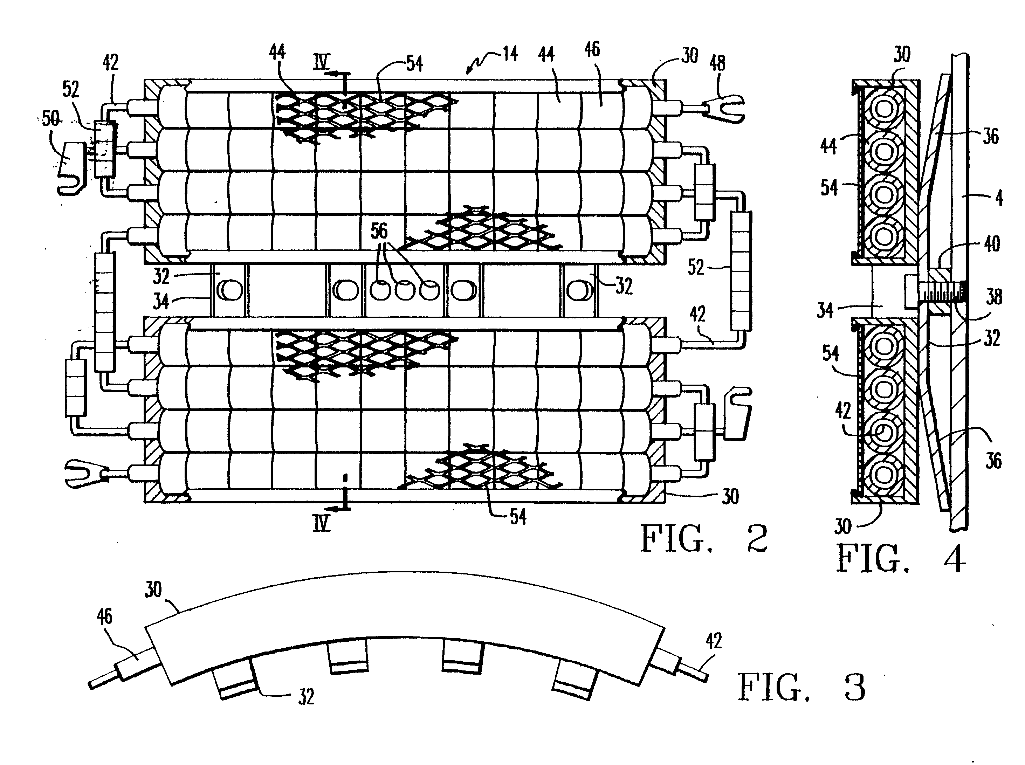

An exemplary embodiment of one heater unit 14 is shown in Figures 2, 3 and 4, Figure 2 being a front elevational view with certain parts being shown in cross section, Figure 3 being a plan view with connecting components removed, and Figure 4 being a cross-sectional view taken along line IV-IV of Figure 2.

The heater unit is composed of two stainless steel trays 30, which are shown in cross section in Figure 2. As is apparent from Figure 3, these trays are curved to conform to the cylindrical surface of the shell shown in Figure 1. Trays 30 are welded to four supports 32. Each support 32 is provided with two tabs 34 which establish proper spacing between trays 30. In addition, each support 32 is provided with two angled legs 36 which, as shown in Figure 4, bear against the outer surface of cylindrical portion 4. The heater unit is connected to cylindrical portion 4 by means of four bolts 38 each extending through an opening provided in a respective support 32 and a threaded opening in cylindrical portion 4. Each bolt 38 additionally passes through a spacer 40 which is interposed between support 36 and cylindrical portion 4. The thickness of spacer 40 can be varied in order to adjust the distance between the heater unit and cylindrical portion 4, to thereby compensate for dimensional inaccuracies of cylindrical portion 4. Each support 32, and particularly legs 36, is given a degree of flexibility to allow for various spacer thicknesses. Trays 30 and supports 32 may be made of stainless steel.

Each tray 30 contains four heating elements 42, each heating element being constituted by a coiled length of an 80 percent nickel-20 percent chromium alloy. Each heating element 42 is encased by a string of ceramic insulating rings 44 made, for example, of $Al_2O_3$. At each end of each heating element 42, there is provided a specially formed ceramic insulating ring 46 having a reduced diameter portion which extends through an opening provided in the end of tray 30. Each heating element 42 projects out of its associated tray 30 and is connected to either a terminal lug 48, 50 or to another heating element 42. When two heating elements are connected together, the connecting region is enclosed by ceramic insulating rings 52.

The outer surface of each tray 30 is covered with an expanded metal screen 54 which is provided to facilitate radiation heat transfer to the vessel wall from the heating elements, to hold heating elements 42 and rings 44 and 46 in place, and to retain any pieces which may break off from ceramic rings 44 and 46.

As is apparent from Figure 2, heating elements 42 of one heater unit are connected to form two independent circuits with successive heating elements of one circuit alternating with successive heating elements of the other circuit. During an annealing operation, only one circuit is employed, the other circuit providing a functionally identical backup in case the primary circuit should fail.

Connection to each circuit is effected by connecting terminal lugs 48, 50 to conductor posts which extend through cylindrical portion 4 in an insulated manner, as will be described below.

Each heater unit of the type shown in Figure 2 will be mounted on cylindrical portion 2, 4 at a location where the cylindrical portion is provided with openings for the passage of three thermocouples 56. Two of these thermocouples will be positioned against the wall of the vessel being treated, while the third thermocouple will be positioned at a distance, for example 2.5 cm, from the vessel wall. The readings produced by these thermocouples will be employed to monitor the ongoing heating operation, as described in the above-referenced application having U.S. Serial No. 368,459, filed on the same date as the present application (June 19, 1989). The location of thermocouples 56 at the center of the heater unit serves to provide an accurate reading of the heating action of the heater unit, and thus facilitate the control of heating power to the heater unit.

Heating elements 42 and their associated ceramic rings 44, 46 are securely held in position by trays 30 and screens 54, as well as by contact between ceramic rings of adjacent heating elements. Thus, good structural support is provided for the comparatively weak heating elements. The heating element geometry shown in Figures 2-4 is selected to provide maximum heating power density consistent with heating element operating life requirements. The number and size of the heater units are selected in accordance with the dimensions of the vessel to be treated. Output heat power density is maximized by placing the heating elements with their associated ceramic insulators side by side in each tray. The vertical spacing between heater units is made as small as possible and is limited only by the space required to replace an individual unit. Similarly, the horizontal distance between heater units is made as small as possible, taking into account the space needed for the external current connections and introduction of the tools needed to make these connections. The distance between the trays 30 of each heater unit is similarly made as small as possible, taking into account the space required for thermocouples 56.

Replacement of a heater unit can be achieved in a simple manner since it requires only disconnection of the external current conductors from lugs 48 and 50 and removal of bolts 38.

Reverting to Figure 1, the heater units 16 provided on the hemispherical dome of the support shelf are structurally similar to that shown in Figures 2-4 and differ only in that the associated trays are shaped to conform to the outline of the dome.

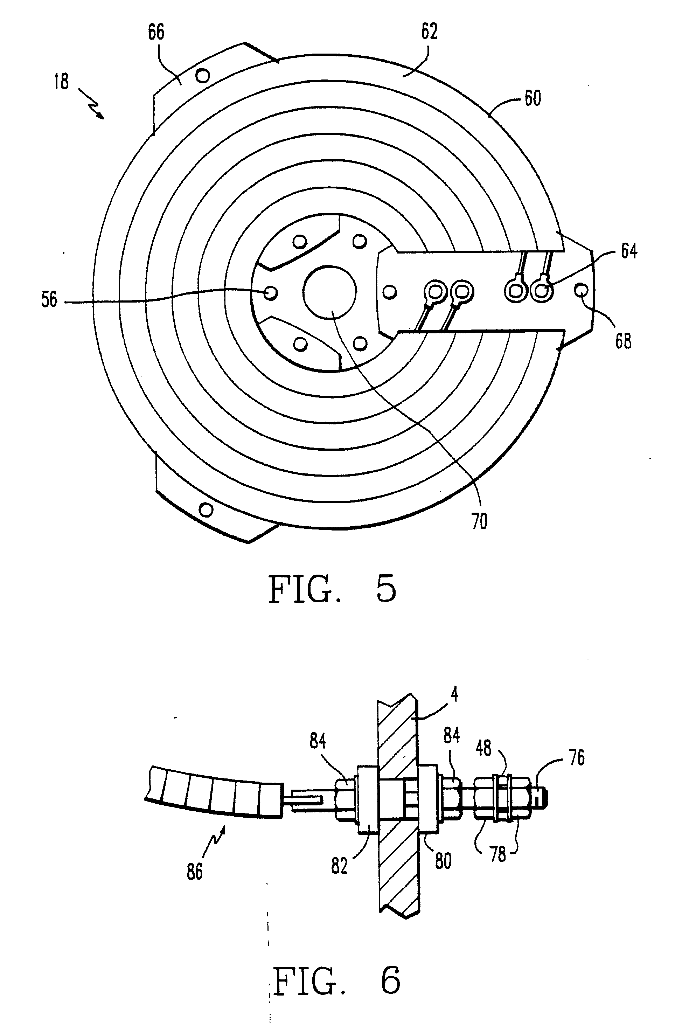

A suitable form for the heater unit 18 at the bottom of the dome is illustrated in plan view in Figure 5. This heater unit is composed of an annular tray 60 carrying six heating elements 62 encased in ceramic rings. Heating elements 62 are connected together into two independent circuits having external terminal lugs 64. The heater unit is supported by three support plates 66 secured to the shell of the heater assembly by bolts extending through passages 68 at each end of each support plate 66. Within the region enclosed by tray 60 there are disposed three thermocouples 56 which will be positioned relative to the vessel being heated in the manner described above with reference to Figure 2. The center of the dome is provided with an opening 70 for passage of a drain tube having an inlet end that will be brought to the bottom of the vessel to be treated.

Heater unit 18 has only six heating elements, three in each independent circuit, because these heating elements are longer than the heating elements 42. In general, all heater units 14, 16, 18 will be dimensioned so that all heating element circuits have substantially the same resistance. This will assure that all conductors and heating elements carry substantially the same current level.

One suitable terminal structure for supplying current to the heater units is illustrated in Figure 6. This structure includes a post terminal 76 having a threaded end onto which two nuts 78 are screwed for clamping lug 48 in place to establish a conductive connection with terminal 76. If desired, washers may be interposed between each nut 78 and lug 48. Terminal 76 extends through an opening in cylindrical portion 4 and is electrically insulated from portion 4 by a disk-shaped ceramic bushing 80 and a ceramic bushing 82 having a reduced diameter portion which extends into the opening in portion 4. Bushings 80 and 82 are clamped against portion 4 by nuts 84. At the interior of the region enclosed by cylindrical portion 4, post 76 is welded to an internal conductor 86, which will be described in detail below. Post 76 may advantageously be made of nickel. If desired, bushing 80 can be in the same form as bushing 82, i.e., bushing 80 may be provided with a reduced diameter portion which is inserted into the opening provided in cylindrical portion 4.

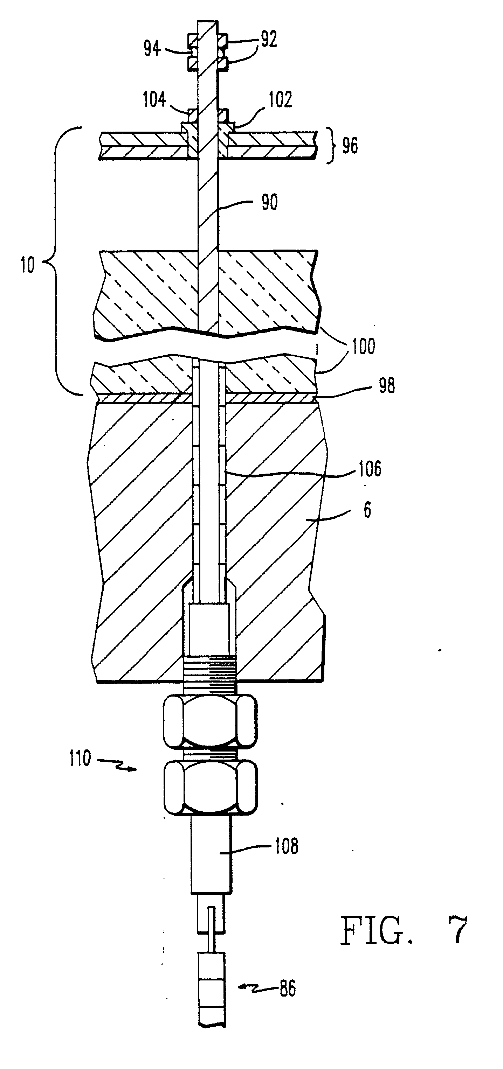

Figure 7 illustrates a suitable external terminal arrangement for connecting an internal conductor 86 to an external conductor brought to the region of support structure 10 (Figure 1). The electrical connection is established by means of a post terminal 90, preferably made of nickel, which extends from above structure 10 to below top plate 6 and is welded, at its lower end, to internal conductor 86. At its upper end, post terminal 90 is provided with a threaded region onto which are screwed two nuts 92 between which is clamped a lug 94 of an external power conductor. Support structure 10 includes a supporting frame composed of a top wall structure 96 and a bottom wall 98, both of which walls are made of metal. Between top wall structure 96 and bottom wall 98, there are provided a ventilating air flow space and a mass of thermal insulation 100. In the region where post terminal 90 passes through top wall structure 96, it is insulated from that structure by a ceramic bushing 102 having a reduced diameter portion which extends into an opening formed in structure 96 and which is held in place by a nut 104.

In the region where post terminal 90 passes through top plate 6, which is of stainless steel, terminal 90 is enclosed by a string of ceramic bushings 106 and in the region where post terminal 90 exits downwardly from top plate 6, it passes through an elongated ceramic tube 108 which is surrounded by a compression fitting 110 which is threaded and sealed into an opening provided in the lower surface of top plate 6. Compression fitting 110 may be of a commercially available type, such as those manufactured under the trademark Conax, and forms, together with tube 108, a ceramic seal gland. Fitting 110 is tightened around tube 108 so as to lock terminal 90 in place and form a seal between post terminal 90 and top plate 6 so that the region below top plate 6 can be maintained at a subatmospheric pressure necessary to prevent the escape of airborne radioactive products from the reactor pressure vessel during heat treatment.

Each thermocouple 56 (Figures 2 and 5) extends through a guide tube within the assembly shell and each guide tube may extend in a sealed manner through a connector 110 at the location where it passes through top plate 6.

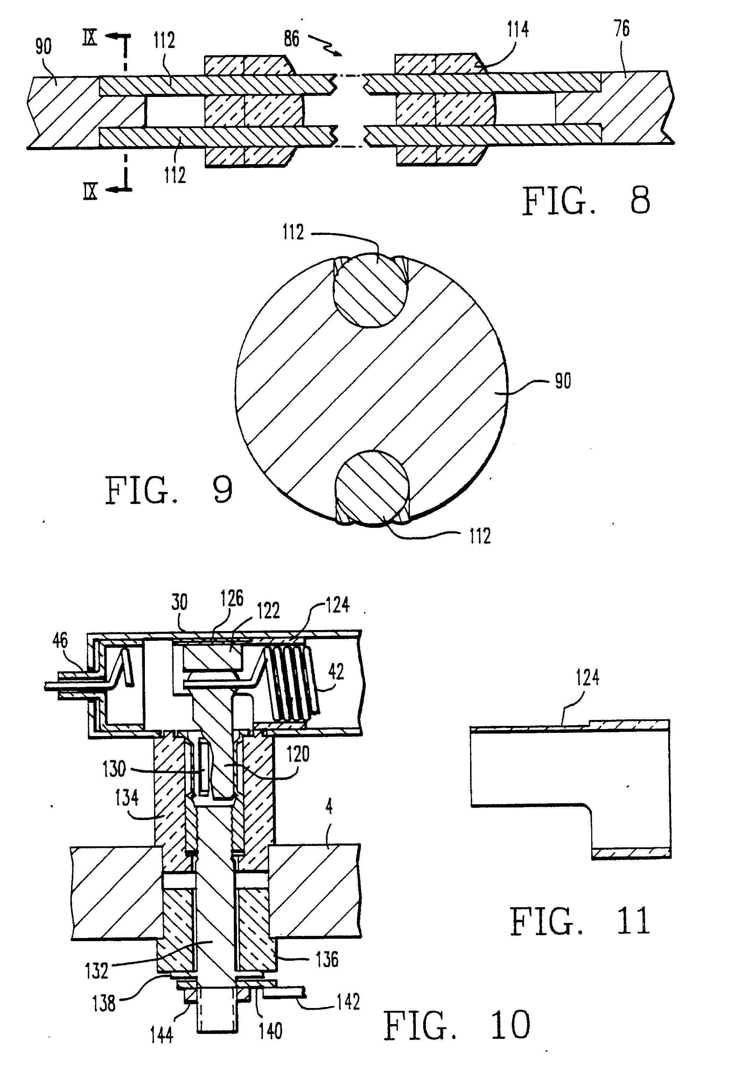

Figure 8 shows, in cross section, one advantageous embodiment of internal conductor 86 connected between a post terminal 76 and a post terminal 90. According to this embodiment, conductor 86 is composed of two nickel wires 112 threaded through ceramic insulators 114 along substantially the entire length of conductor 86. Each ceramic insulator 114 is provided with two spaced openings for passages of wires 112 and has a convex surface at one end and a matching concave surface at the other end to permit adjacent insulators 114 to remain in contact with one another when wires 112 are bent to connect a vertically extending post 90 to a horizontally extending post 76. At their ends, wires 112 are welded to posts 76 and 90. The use of two wires 112 provides the flexibility required to establish such a connection, while providing the requisite current carrying capacity.

A suitable manner of coupling wires 112 to each post is shown in Figure 9, which is a cross-section taken through the line IX-IX of Figure 8. According to this embodiment, each post, such as post 90, is provided with two recesses of generally U-shaped cross section into each of which a respective one of wires 112 is seated. Wires 112 are then welded to post 90. This provides a highly secure connection capable of resisting the thermal stresses experienced by all of the components in the heater unit assembly.

An alternative arrangement, according to the invention, for supplying heating current to each heater unit is illustrated in Figures 10 and 11. For establishing each external connection to a heater unit, the end of a heating element 42 is welded to a solid post 120, shown partly broken away in Figure 10. Post 120 is additionally welded to a support member 122 and passes through an opening provided in the bottom surface of tray 30. The end region of heating element 42, which is welded to post 120, is enclosed by a specially formed ceramic insulator 124,. shown separately in Figure 11, held in place by a strap 126 fastened at its ends to the bottom of tray 30. Ceramic insulator 124 is partially cut away to permit passage of post 120.

Cylindrical shell portion 4 is provided with an electrical receptacle 130 formed to have interference fit strips which firmly engage post 120. A connecting post 132 extends through the opening in portion 4 and is enclosed by ceramic insulators 134 and 136. Insulator 134 has a reduced diameter portion at each end, one such portion extending into the opening in the bottom of tray 30 and the other such portion extending into the opening in shell portion 4. Ceramic insulator 136 has a reduced diameter portion which also extends into the opening in shell portion 4. Post 132 is provided with a shoulder 138 which captures ceramic insulator 136. Receptacle 130 is threaded onto the external end of post 132 so as to establish a good conductive connection therewith and to clamp post 132 and insulators 134 and 136 in position in the opening in shell portion 4. The interior end of post 132 is arranged to receive a lug 140 to which is welded a current conductor 142. Lug 140 is clamped in place against shoulder 138 by a nut 144. Conductor 142 may be welded to a conductor 86 in the manner shown in Figure 8. Alternatively, post 132 can be welded to conductor 86.

Figure 10 additionally shows an end of one of the other heating elements which is installed in tray 30 and which is connected to one of the other heating elements of the heater unit.

With the exception of the external connection structure illustrated in Figure 10, the heater unit of this embodiment would be identical to that illustrated in Figures 2-4.

The advantage of the arrangement illustrated in Figure 10 is that it greatly simplifies replacement of a heater unit since such replacement would require only removal of the bolts 38 shown in Figure 4, after which physical removal of the heater unit is automatically accompanied by unplugging of posts 120 from their associated receptacles 130. In addition, the connecting structure shown in Figure 4 allows the horizontal distance between adjacent heater units to be reduced.

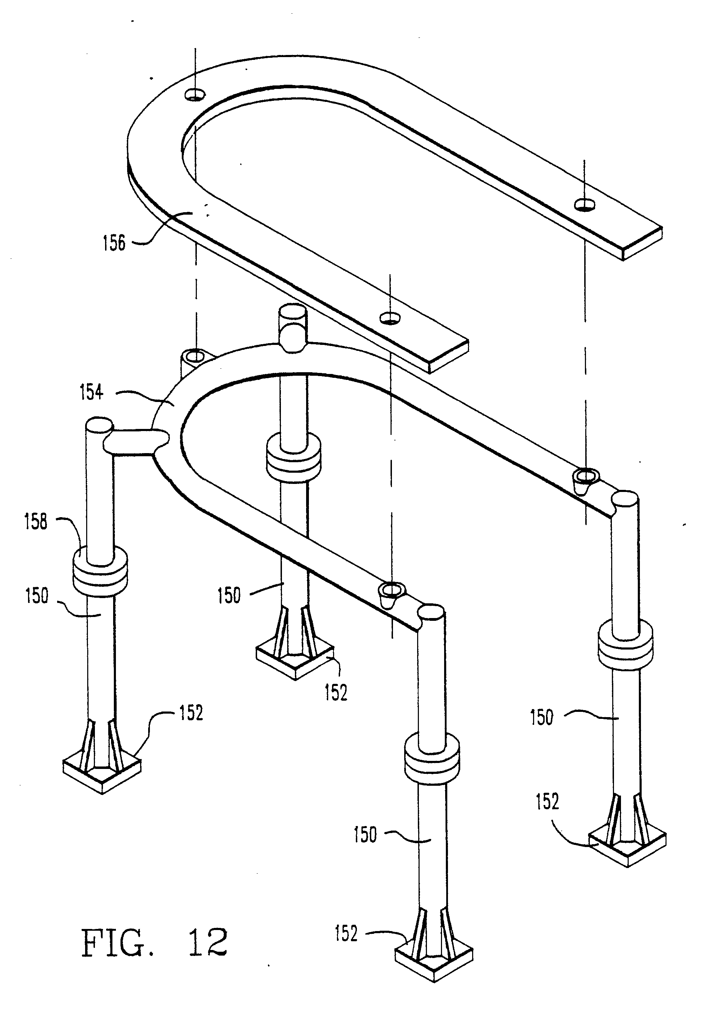

In order to facilitate fabrication and maintenance of the assembly described thus far, use can advantageously be made of a specially constructed maintenance stand shown in an exploded, perspective view in Figure 12. This stand includes a plurality of vertical, tubular columns 150 provided at their lower ends with support feet 152 and carrying, at their upper ends, a tubular U-shaped member 154 which is welded to the upper parts of columns 150. The stand is completed by a U-shaped plate 156 having openings via which plate 156 can be bolted to member 154.

Columns 150 and member 154 may be made of carbon steel, while plate 156 is preferably made of stainless steel, selected for its corrosion resistance.

Preferably, each column 150 is made of two parts which are bolted together at mating flanges 158. Thus, the stand can be disassembled into relatively small components for transportation to a work site.

The maintenance stand is constructed to support a heater unit assembly having the form shown in Figure 1, with top plate 6 of the assembly resting on plate 156. The U-shaped configuration of the maintenance stand allows a heater unit assembly to be introduced either horizontally or vertically. The components of the maintenance stand are given sufficient strength and stability to support workers standing on top plate 6 of the heater unit assembly. Columns 150 are spaced apart sufficiently to allow clearance for workers to have access to the heater unit assembly shell. Plate 156 may be provided with structures for

7

fixing the heater unit assembly in place.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. A heater unit assembly for annealing a reactor vessel, the vessel having an interior wall and being open at the top, and the assembly being constructed to be inserted into the vessel, characterized in that said assembly comprises:
support means composed of a top plate (6) dimensioned to rest on the top of the vessel and a hollow cylindrical body (2,4) which is open at the top and closed at the bottom, said body (2,4) being secured to said top plate (6) to extend downwardly therefrom and having a configuration at least approximately conforming to that of the vessel and having an outer surface which faces the interior wall of the vessel when said assembly is inserted in the vessel;
a plurality of electrical resistance heater units (14.16.18) mounted on said body (2,4) and projecting from said outer surface of said body (2,4) to face the interior wall of the vessel when said assembly is inserted in the vessel, said heater units (14,16,18) being distributed uniformly across said outer surface for effecting uniform heating of the vessel; and
electrical power conductor means (76,86,90) extending through said top plate (6) to the interior of said body (2,4) and conductively connected to said heater units (14,16,18).

2. An assembly as defined in claim 1 further characterized by temperature monitoring means (56) extending through said outer surface of said body (2,4) for monitoring the temperature of the vessel interior wall when said assembly is inserted in the vessel.

3. An assembly as defined in claim 2 characterized in that each said heater unit (14,16,18) is shaped to conform to said outer surface of said body (2,4).

4. An assembly as defined in claim 2 characterized in that said temperature monitoring means comprise a plurality of temperature monitoring units and each said temperature monitoring unit is located at least approximately at the center of the region occupied by a respective heater unit (14,16,18).

5. An assembly as defined in claim 4 characterized in that said heater units (14,16,18) are arranged in a plurality of horizontal rows and the heater units (14,16,18) in one row are angularly offset from the heater units (14,16,18) in an adjacent row.

6. An assembly as defined in claim 2 characterized in that said temperatures monitoring means extend through said top plate (6), and further characterized by hermetic sealing means (108.110) forming a hermetic seal between said top plate (6) and both said conductor means (90) and said temperature monitoring means.

7. An assembly as defined in claim 1 characterized in that said conductor means (76,86,90) comprise a plurality of bendable internal conductors (86) located at the interior of said body (2,4) and each said conductor (86) comprises two parallel wires (112) and a plurality of ceramic insulators (114) enclosing said wires (112).

8. An assembly as defined in claim 7 characterized in that each said insulator (114) has a convex end and a concave end and said insulators (114) are disposed adjacent one another along the length of said wires (112) such that the convex end of one said insulator (114) engages the concave end of an adjacent insulator (114).

9. An assembly as defined in claim 1 characterized in that each said heater unit (14,16,18) comprises:
housing means (30) including at least one container having two opposed major sides and being open at one major side, and a screen (54) covering the one major side;
a plurality of resistive heating elements each constituted by a resistive heating wire (42) having two ends and electrical insulation (44,46) surrounding said wire (42), said elements being disposed parallel to one another in said container and forming a single layer which is held in place between said screen and the other major side of said container.

10. An assembly as defined in claim 9 characterized in that, in each said heater unit (14,16,18):

said heating elements are divided into two groups;

said heating elements of each said group are connected together in series; and

said conductor means (76) are connected to said two groups for selectively supplying operating current to only one group.

11. An assembly as defined in claim 10 characterized in that, in each said heater unit (14,16,18), said heating elements of one said group alternate in said layer with said heating elements of the other said group.

12. An assembly as defined in claim 9 further characterized by means (120,130,132) providing a plug-in connection between each said heater unit (14,16,18) and said conductor means (86,90).

13. An assembly as defined in claim 12 characterized in that said means (120,130,132) providing a plug-in connection comprise a plurality of first connectors (130) connected to said conductor means and secured to said support means (2,4) and a plurality of second connectors (120) connected to said heater units (14,16,18) and releasably coupled to said first connectors (130).

14. An assembly as defined in claim 13 characterized in that said means (120,130,132) providing a plug-in connection are oriented such that movement between each said first connector (130) and an associated second connector (120) to effect releasable coupling is in a direction substantially perpendicular to said outer surface of said cylindrical body (2,4).

15. An assembly as defined in claim 9 characterized in that said housing means (30) of each said heater unit (14,16,18) further comprises a positioning member (36) secured to said container and bearing against said outer surface of said cylindrical body (2,4) for positioning said heater unit (14,16,18) relative to said cylindrical body (2,4), said positioning member (36) having a resilient portion for causing said positioning member (36) to bear against said outer surface when the distance between said container and said outer surface has any value within a selected distance range.

16. An assembly as defined in claim 1 in combination with a maintenance stand (150-158) for supporting said assembly outside of the vessel, said maintenance stand (150-158) comprising:

a holding member (156) defining a U-shaped horizontal support surface for supporting said top plate (6) of said support means while said support means extends downwardly below said holding member (156), and for permitting said top plate (6) to be placed onto said support surface by movement of said support means in either a vertical direction or a horizontal direction; and

supporting legs (150) supporting said holding member (156) on a floor surface so that the vertical distance between said support surface and the floor is greater than the height of said hollow cylindrical body (2,4) of said support means, said legs (150) being spaced apart to enclose a region having horizontal dimensions larger than those of said hollow cylindrical body (2,4).

17. A heater unit (14,16,18) for use in a reactor vessel annealing assembly which is inserted into the vessel to perform an annealing treatment, said heater unit comprising:

housing means (30) including at least one container having two opposed major sides and being open at one major side, and a screen covering the one major side;

a plurality of resistive heating elements each constituted by a resistive heating wire (42) having two ends and electrical insulation (44,46) surrounding said wire (42), said elements being disposed parallel to one another in said container and forming a single layer which is held in place between said screen and the other major side of said container.

18. A heater unit (14,16,18) as defined in claim 17 characterized in that:

said heating elements are divided into two groups;

said heating elements of each said group are connected together in series; and

said two groups are individually connected to a current supply so that only one selected group receives operating current.

19. A heater unit (14,16,18) as defined in claim 18 characterized in that said heating elements of one said group alternate in said layer with said heating elements of the other said group.

20. A heater unit (14,16,18) as defined in claim 17 further comprising means (120,130,132) providing a plug-in connection between each said heater unit (14,16,18) and a current conductor (132).

21. A heater unit (14,16,18) as defined in claim 20 characterized in that said means (120,130,132) providing a plug-in connection comprise a plurality of first connectors (130) each connected to a current conductor and a plurality of second connectors (120) connected to said heater units (14,16,18) and releasably coupled to said first connectors (130).

22. A heater unit (14,16,18) as defined in claim 21 characterized in that said means (120,130,132) providing a plug-in connection are oriented such that movement between each said first connector (130) and an associated second connector (120) to effect releasable coupling is in a direction substantially perpendicular to said major sides of said container.

23. A heater unit (14,16,18) as defined in claim 17 characterized in that said housing means (30) further comprises a positioning member (36) secured to said container for positioning said heater unit (14,16,18) relative to the assembly, said positioning member (36) having a resilient portion for permitting the position of said heater unit (14,16,18) on the assembly to be adjusted over a selected range.

FIG. 1

FIG. 4

FIG. 3

FIG. 2

FIG. 5

FIG. 6

FIG. 7

FIG. 8

FIG. 9

FIG. 10

FIG. 11

FIG. 12